Europäisches Patentamt

European Patent Office

Office européen des brevets

(11) Publication number: **0 347 132**
**A2**

# (12) EUROPEAN PATENT APPLICATION

(21) Application number: **89305885.9**

(22) Date of filing: **12.06.89**

(51) Int. Cl.⁴ **B61D 17/04 , B61D 17/10 , B61F 1/14**

(30) Priority: **13.06.88 JP 143730/88**

(43) Date of publication of application:
**20.12.89 Bulletin 89/51**

(84) Designated Contracting States:
**DE FR GB IT**

(71) Applicant: **HITACHI, LTD.**
**6, Kanda Surugadai 4-chome**
**Chiyoda-ku Tokyo 101(JP)**

(72) Inventor: **Ohmura, Keiji**
**1611-10 Nishitoyoi**
**Kudamatsu-shi Yamaguchi-ken(JP)**
Inventor: **Okazaki, Masato**
**2-2 Hataokan 5-chome**
**Kudamatsu-shi Yamaguchi-ken(JP)**
Inventor: **Okuno, Sumio**
**1038-33 Kouchi Tanaka**
**Kudamatsu-shi Yamaguchi-ken(JP)**
Inventor: **Tsuruda, Hitoshi**
**1166 Higashitoyoi**
**Kudamatsu-shi Yamaguchi-ken(JP)**
Inventor: **Takeichi, Michifumi**
**428-1 Higashitoyoi**
**Kudamatsu-shi Yamaguchi-ken(JP)**

(74) Representative: **Calderbank, Thomas Roger et al**
**MEWBURN ELLIS 2 Cursitor Street**
**London EC4A 1BQ(GB)**

(54) Car body for railway rolling stock.

(57) This invention relates to a car body of railway rolling stock. It is well known to use an aluminium alloy to make the car body of railway rolling stock, in order to make a light weight car body. However, in the prior art car body, various members constituting the car body are standardized. Therefore the bending rigidity with respect to a vertical load acting against the car body is substantiated for its manufacturing process.

Accordingly, a light weight car body has a certain limitation. The present invention seeks to make a light weight car body presently used. It makes use of the fact that a distributing condition of a shearing load acting against the car body and the bending load are different to each other. The present invention therefor proposes that a shearing rigidity in respect to a vertical load in the portion near the body bolster (A) of the car body (1) is made larger than that of the portion other than a portion near the body bolster (A). That is, a shearing rigidity in respect to the vertical load of a portion near the portion of body bolster (A) of the car body (1) is improved and the portion other than the portion near the body bolster (A) of the car body (1) has a sufficient bending rigidity in the same manner as that of the prior art structure. Thus, the present invention may make a more light weight car body than that which is presently used.

FIG. 1

# CAR BODY FOR RAILWAY ROLLING STOCK

This invention relates to a car body for railway rolling stock and more particularly a car body for railway rolling stock which is preferable for one running at a high speed.

A car body for railway rolling stock is composed of an underframe, a side construction, a roof construction and an end construction as described in pages 15 to 79 and 15 to 80 of a revised edition No.6 (1977) of the Handbook of Mechanical Engineering, for example. The underframe, side construction, roof construction and end construction described above are assembled and combined to each other to form a car body. A load acting on the car body is supported by the underframe, side construction, roof construction and end construction. The side construction is connected at its lower end to the underframe and at its upper end to the roof construction, respectively. Accordingly, the side construction described above may support almost of all the bending load acting against the car body, for example, a vertical load of a self-weight and passengers and a bending load generated by an end load of the car body.

In recent years, it is strongly requested to have a light weight car body in order to make a high speed railway rolling stock and to reduce a consumption power. In addition, in order to save a labor in manufacturing car body and to reduce a required period of time for making it, it has been carried out to improve a structure of the car body and a manufacturing process thereof.

As an example of making a light-weight car body, it is already described in page 38 of the Car Body Engineering No.176 (1986). That is, the car body is manufactured by a large-sized extruded member of aluminum. Each of the side construction, underframe and roof construction for constituting the car body is connected by a method wherein a plurality of extruded members are longitudinally guided in a car body and connected to each other through welding process. Accordingly, the number of component parts constituting the car body can be substantially decreased. In addition, it is also possible to reduce the labor and working time required in case of performing the manufacturing operation. In this case, a specification of an outside plate and frame which may act to form the car body is determined in reference to a load acting against the said member. As already described in pages 57 to 61 of the Railway Vehicle and Design Engineering (published by Ohkawa Publishing in 1980), for example, a calculation program through a finite element method is utilized to analyze a construction of car body and to calculate a deformation of the car body or its stress and the like. Then, a plate thickness and a shape of the outside plate and a frame member are determined in response to a stress acting on each of the portions in the car body. In addition, a specification of the above-mentioned outside plate and frame member has been considered as one in which it is standardized as much as possible and its number of types is reduced. A structure of each of the portions of the car body is determined in view of a bending stiffness of an entire car body which may substantially influence over a riding comfortable feeling. Further, a specification of each of the portions described above for constructing the car body is also determined in view of the bending stiffness of the entire car body.

In the prior art, the bending load acting against the car body has been most substantiated in order to assure the bending stiffness of the entire car body. The entire car body has been constructed to have a substantial uniform bending stiffness by making a common specification of the outside plate and frame member forming the car body.

In the prior art, a shearing load at the part where a body bolster for transmitting to truck an entire load of the car body is mounted is quite high. However, as regards the shearing load acting near the body bolster, it has not been sufficiently considered. For example, in the prior art, such a countermeasure has been provided in which a reinforcing member is partially mounted in order to prevent a buckling of the outside plate and a concentration of stress at the corners of a window frame generated under the shearing load described above. So, the specification of the outside plate and the frame member constructing the car body or the structure of each of the portions of the car body has not been determined sufficiently in view of the shearing load described above. That is, a high shearing load acts near the body bolster and a high bending load may act at the central part of the car body. However, the structure of the car body does not sufficiently support the shearing load and the bending load described above and does not make a light weight structure. Accordingly, the car body structure in the prior art is not necessarily an effective structure for improving its light weight formation.

It is a first object of the present invention to provide a light weight car body for railway rolling stock.

It is a second object of the present invention to provide a car body of railway rolling stock of light weight having a structure in which a shearing load and a bending load acting against the car body can be efficiently supported.

It is a third object of the present invention to provide a car body of railway rolling stock of which manufacturing is easily performed.

In the drawings:

Fig. 1 is a side elevational view for showing a car body for illustrating a gist of this invention.

Fig. 2 is a distribution of a bending moment in case that a vertical load acts against a car body.

Fig. 3 is a distribution view of a shearing load in case that a vertical load acts against a car body.

Fig. 4 is a side elevational view for showing a first preferred embodiment of a car body of this invention.

Fig. 5 is a front elevational view for showing an intermediate post frame of Fig. 4.

Fig. 6 is a sectional view taken along VI-VI of Fig. 4.

Fig. 7 is a side elevational view for showing a second preferred embodiment of a car body of this invention.

Fig. 8 is a side elevational view for showing an enlarged window frame of a third preferred embodiment of a car body of this invention.

Fig. 9 is a side elevational view for showing a fourth preferred embodiment of a car body of this invention.

Fig. 10 is a side elevational view for showing a fifth preferred embodiment of a car body of this invention.

Fig. 11 is a side elevational view for showing a sixth preferred embodiment of a car body of this invention.

Fig. 12 is a side elevational view for showing a seventh preferred embodiment of a car body of this invention.

Fig. 13 is a side elevational view for showing a eighth preferred embodiment of a car body of this invention.

Fig. 14 is a front elevational view for showing an inner surface of a side construction of a car body of an ninth preferred embodiment of the car body of this invention.

Fig. 15 is a sectional view taken along a line XV-XV of Fig. 14.

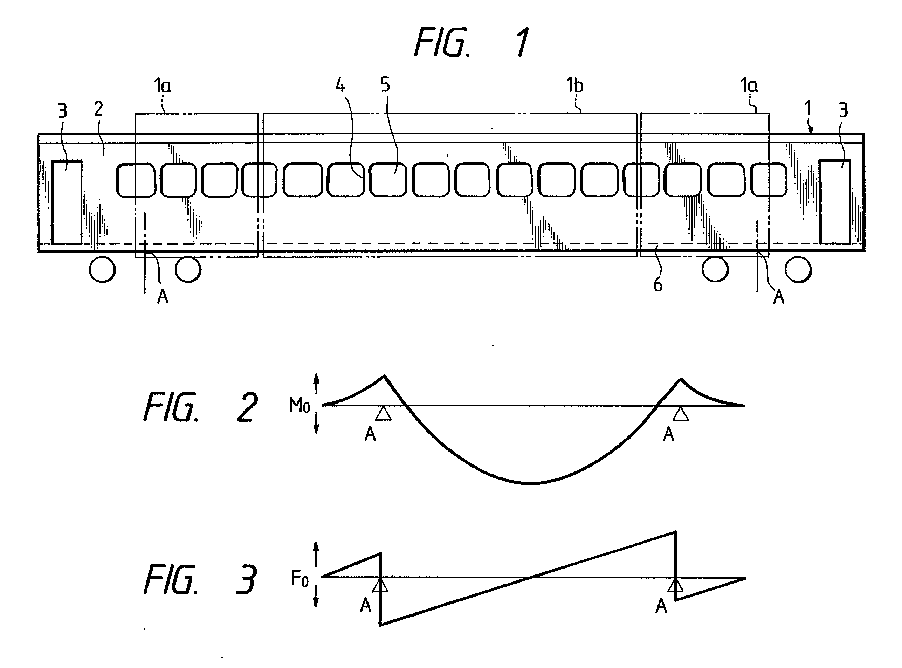

Referring now to the drawings, one preferred embodiment and other preferred embodiments of this invention will be described hereinafter. In reference to Fig. 1, a gist of the present invention will be described. In this figure, reference numeral 1 denotes a car body, and reference numeral 2 denotes a side construction constituting both side surfaces of the car body 1. The side construction 2 is formed with openings 3 near its both longitudinal ends. Between the openings 3 are arranged several windows 5 partitioned by many intermediate posts 4. Reference numeral 6 denotes an underframe constituting a bottom surface of the car body 1. The car body 1 is supported by the truck through body bolsters arranged near longitudinal ends of the underframe 6. The body bolsters are arranged at positions indicated at A in Fig. 1. The body bolsters are used for transmitting a vertical load of the car body 1 to the truck and further transmitting either a drawing force or a braking action generated in the truck to the car body 1. A distribution of a bending moment M and a shearing load F in the car body are shown in Figs. 2 and 3. In order to ensure the bending moment M and the shearing load F, the car body 1 is constructed as follows. That is, the shearing stiffness is made larger at a part 1a near the body bolster in the longitudinal direction of the car body 1 than that of the central portion 1b and the bending stiffness is made larger at the central portion 1b than that near a part 1a of the body bolster. When a vertical load acts on the car body 1, a deformation of the part 1a near the body bolster caused by the shearing load is restricted. With this arrangement, an entire car body 1 may deform as one beam. That is, an amount of deformation at the central part 1b under a vertical load is reduced and further a bending stiffness of the entire car body 1 can be increased.

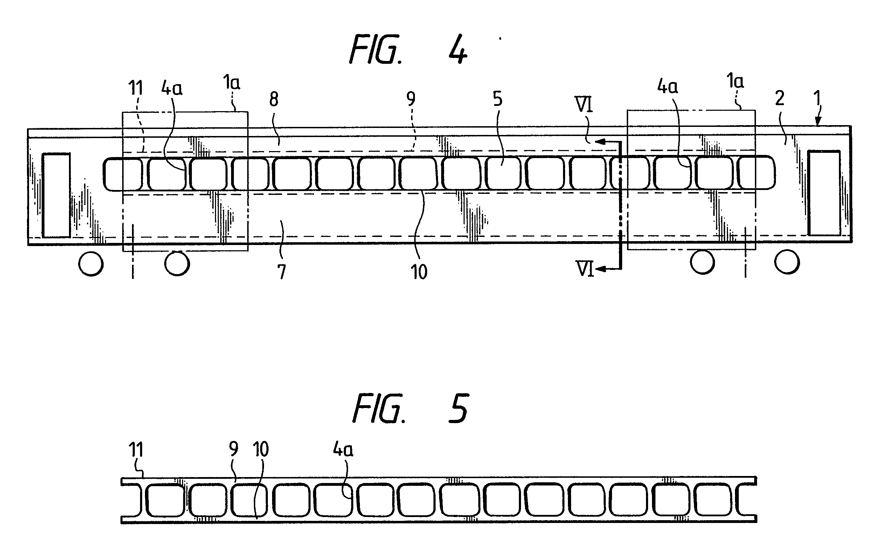

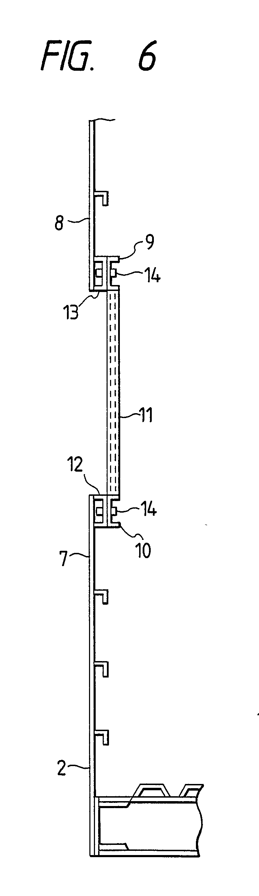

Referring to Figs. 4 to 15, several preferred embodiments of this invention will be described. Each of the preferred embodiments illustrates a practical structure for improving a shearing stiffness of the portion 1a near the body bolster illustrated in Fig. 1, and these structures will be described in detail.

At first, referring to Figs. 4, 5 and 6, the same reference numerals as those of Fig. 1 denote the same member. Reference numeral 7 denotes a wainscot portion constituting a lower part of the windows 5. Reference numeral 8 denotes a window head portion constituting an upper part of the windows 5. The wainscot portion 7 and the window head portion 8 are formed of aluminum alloy members. Reference numeral 4a denotes intermediate post frames for use in partitioning the windows 5 into several units. The intermediate post frames 4a are vertically arranged so as to connect the wainscot portion 7 with the window head portion 8. In this structure, side columns or posts arranged vertically from the window head portion 8 to the wainscot portion 7 are not arranged. Reference numeral 9 denotes an upper frame to be fixed to the lower edge portion of the window head portion 8. Reference numeral 10 denotes a lower frame to be fixed to an upper edge portion of the wainscot portion 7. The upper frame 9 and the lower frame 10 are connected through the intermediate post frames 4a so as to form a ladder-type intermediate post member 11. The intermediate post member 11 is made by high strength material, a stainless steel, for example. Reference numeral 12 denotes a belt rail arranged at an upper edge part of the wainscot portion 7, and reference numeral 13 denotes a window header arranged at the lower edge of the above-mentioned window head portion 8. In this case, between the wainscot portion 7 and the window head portion 8 is formed a continuous large opening in a longitudinal direction of the car body. To this opening is fixed the intermediate post member 11. The intermediate post member 11 is fixed by a method wherein the upper frame 9 is fixed to the window header 13 through blind rivets 14 and the lower frame 10 is fixed to the belt rail 12 through blind rivets 14. By fixing the intermediate post member 11 to the side construction 2, the windows 5 are formed. The blind rivets 14 are mounted in a longitudinal direction of the car body under an appropriate pitch. The blind rivets 14 may be used together with bonding material and further in place of the blind rivets, bolts and nuts may be used.

In addition, the upper frame and the lower frame can be made of clad steel in which the same type of material as that of wainscot portion 7 and the window head portion 8, i.e. aluminum material and the same type of material as that of the intermediate post frames 4a, i.e. stainless steel are connected by an explosion press fitting process or the like. In case that the upper frame and the lower frame are constructed by clad steel, the upper frame and the window header as well as the lower frame and the belt rail can be connected by a welding operation. So, a fixing operation of the intermediate post frame to the side construction can easily be performed.

With such a structure as described above, in case that a vertical load acts on the car body 1, the intermediate post member 11 may support the vertical load together with the car body 1. At this time a shearing load may act at the intermediate post frames 4a of the intermediate post member 11 of the part 1a near the body bolster. The intermediate post frames 4a shows a secondary bending load is generated by the above-shearing load. Accordingly, if the intermediate post member 11 is made by a sufficient higher rigidity construction, it is possible to reduce any deformation generated under an action of the shearing load and the bending load against the car body 1. In turn, the lower frame 10 and the upper frame 9 of the intermediate post member 11 are directly connected to the belt rail 12 and the window header 13 of the side construction 2, and all these members integrally accept the vertical load and the like. In view of this fact, it is also possible to improve a rigidity of the unit. So, the portion 1a near the body bolster of the side construction 2 shows an improved rigidity against the shearing force. With this arrangement, a bending stiffness of the entire car body can be improved. In addition, the intermediate post frames 4a are formed of stainless steel, so its allowable stress is increased more than that of other portions. As the allowable stress of the intermediate post frames 4a is increased, a reliability of strength of the car body 1 can be improved. In addition, a rate of increasing of the rigidity per unit weight of the car body 1 is increased, so that its light weight can be attained.

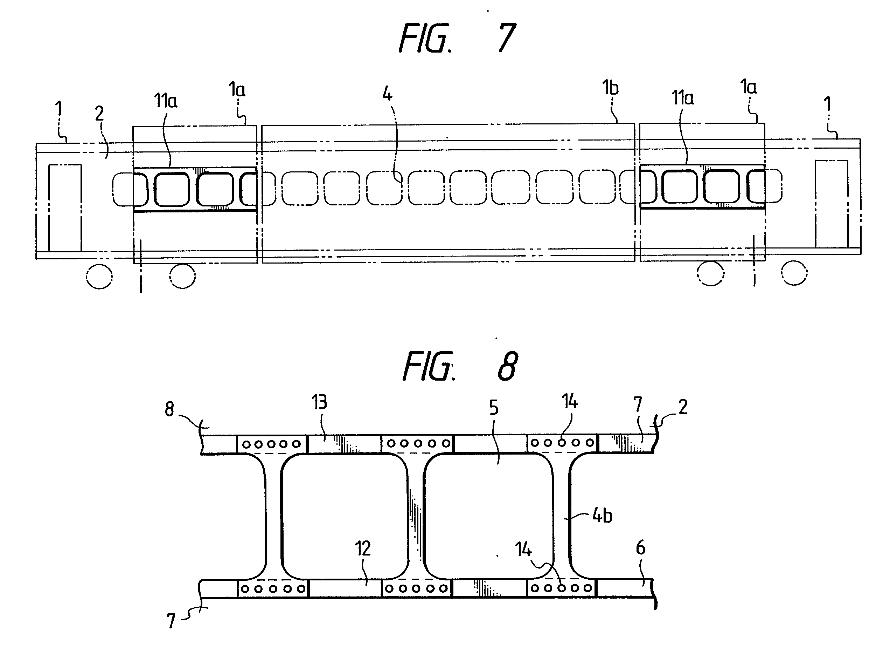

Referring next to Fig. 7, the second preferred embodiment of the present invention will be described. A feature of the structure of the present preferred embodiment consists in the fact that an entire length of the intermediate post member in the first preferred embodiment is shortened more than that of the first preferred embodiment. In this figure, the same reference numerals as that of the first preferred embodiment denote the same members. Reference numeral 11a denotes intermediate post members to be mounted at the side construction 2 corresponding to the portion 1a near the body bolsters of the side construction 2. The intermediate post frame members 11a have a short length in a longitudinal direction of the car body. The intermediate post frames 4 other than that where the intermediate post members 11a are mounted are constructed in the same manner as that of the prior art car body. That is, the side posts are arranged in a vertical direction from the window head portion 8 to the wainscot portion 7 and the side posts constitute the intermediate post frames 4. The intermediate post members 11a are fixed to the window head portions and the wainscot portion of the side construction 2 with the blind rivets in the same manner as that of the first preferred embodiment.

With such an arrangement as above, in case that a vertical load acts against the car body 1, the portion 1a near the body bolster shows the similar situation as that of the first preferred embodiment. In this case, since the central part 1b of the car body 1 is made of the same aluminum alloy as that of the other portions, its deformation is easily generated as compared with the portion 1a near the body bolster. However, at the central part 1b of the car body 1, the shearing load is low as shown in Fig. 3, and no problem may occur even if the stiffness of the intermediate post frames 4 is low. Thus, an arrangement in which the intermediate post members 11a are arranged at the portion 1a near the body bolster enables shearing stiffness of the portion 1a near the body bolster to be improved. In addition, according to the preferred embodiment of the present invention, the intermediate post members 11a are made shorter than that of the previous preferred embodiment, thereby a light weight of the entire car body 1 can be attained.

4

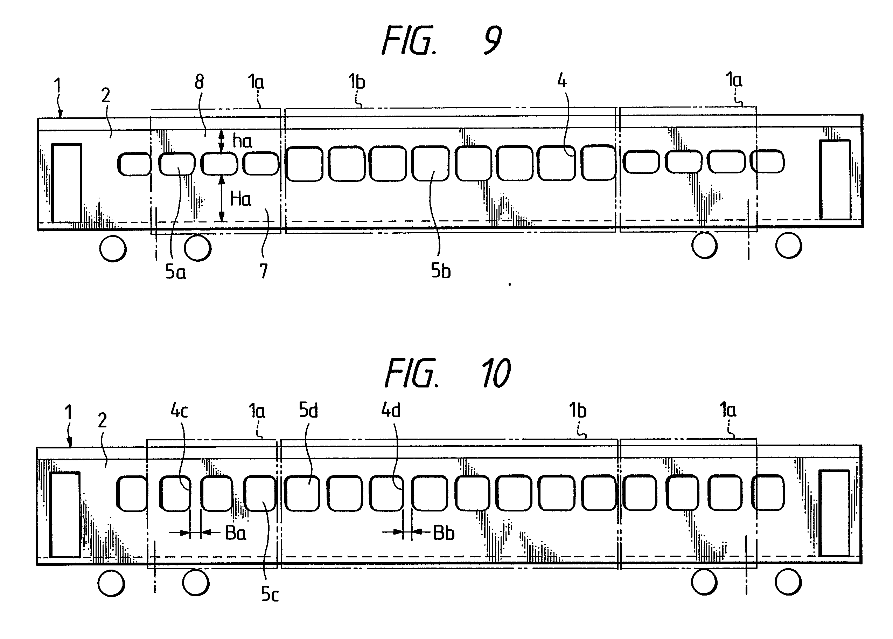

Referring next to Fig. 8, a third preferred embodiment of the present invention will be described. In this preferred embodiment, a plurality of intermediate post frames are made by a single unit in place of the intermediate post members of the first and second preferred embodiments. In this figure, the same reference numbers as that of the previous preferred embodiment denote the same member. Reference numeral 4b denotes intermediate post frames made of high rigidity material, a stainless steel, for example, and fixed in an interval coinciding with a width of each of the windows 5. The intermediate post frames 4b are formed in I-shape and its upper and lower ends are fixed to the belt rail 12 and the window header 13 with blind rivets 14.

In this way, the intermediate post frames 4b are fixed to the side construction 2, thereby a rigidity of the side construction 2 can be improved. Thus, an improved rigidity of the side construction 2 enables a rigidity of the car body 1 to be improved. Since the intermediate post frames 4b are made by a single unit, its mass production can be performed. So, a productivity can be improved. The intermediate post frames 4b are at their upper and lower ends connected to the window head portion 8 and the wainscot portion 7. Accordingly, it is not necessary to use the upper frame 9 and the lower frame 10 as disclosed in the first and second preferred embodiments. With this arrangement, a light weight of the entire car body 1 can be attained. Each of the preferred embodiments shown in Figs. 9 to 12 is an example in which a shape of the opening of the window is improved.

Referring now to Fig. 9, a fourth preferred embodiment of the present invention will be described. In this figure, the same reference numerals as that of each of the preferred embodiments denote the same member. Reference numeral 5a denotes windows in which a vertical size of an opening portion is made shorter than that of the window 5b at the central part 1b of the side construction 2. The windows 5a are formed near the portion 1a of the body bolster. At an installing position of each of the windows 5a, each of a vertical size Ha of the wainscot portion 7 and a vertical size ha of the window head portion 8 is made shorter than a vertical size of each of the wainscot portion 7 and the window head portion 8 at the central part 1b. With this arrangement, at the portion 1a near the body bolster at the side construction 2, a rate of area of the opening in the outside plate is reduced. Accordingly, at the portion 1a near the body bolster of the side construction 2, a stress is reduced in respect to the shearing load and then a rigidity of the unit can be improved. With this arrangement, a deformation of the car body 1 in respect to the shearing load at the portion 1a near the body bolster is reduced and further an entire bending rigidity can be improved.

In the constitution of the preferred embodiment of the present invention, if all the members constituting the side construction 2 is the same kind of material to each other, the number of manufacturing steps can be reduced as compared with that of mounting different types of materials. In addition, as compared with the case in which a separate member having a relative heavy weight with a high rigidity is mounted, the car body is effective in reducing a weight of the car body.

Referring now to Fig. 10, a fifth preferred embodiment of the present invention will be described. A feature of constitution of the preferred embodiment of the present invention consists in the fact that all the sizes of the vertical portions of the windows are the same and that a width of the intermediate post and window is different to each other. In this figure, the same reference numerals at that of each of the preferred embodiments denote the same member. Reference numeral 4c denotes an intermediate post frame at the portion 1a near the body bolster. The intermediate post frames 4c are formed such that its horizontal size, i.e. a width Ba is wider than a width Bb of the intermediate post frames 4d at the central part 1b of the car body. A difference of a width size between the intermediate post frame 4c and the intermediate post frame 4d is equal to a difference in width size between the window 5c and the window 5d. Accordingly, the window 5c is made shorter than a width size by a difference between the intermediate post frame 4c and the intermediate post frame 4c than that of the window 5d.

According to he structure of the preferred embodiment of the present invention, since an area of the opening part of the portion 1a near the body bolster of the side construction 2 is reduced in the same manner as that of the fourth preferred embodiment, a rigidity of the portion 1a near the body bolster at the side construction 2 can be improved. The intermediate post frame 4c can reduce a bending deformation at a secondary location generated by a shearing deformation.

Accordingly, the structure of the preferred embodiment of the present invention can improve a rigidity of the car body 1 and further provide a light weight of the car body 1. This is effective in view of the reduction of labor and manufacturing time in case of making the car body 1.

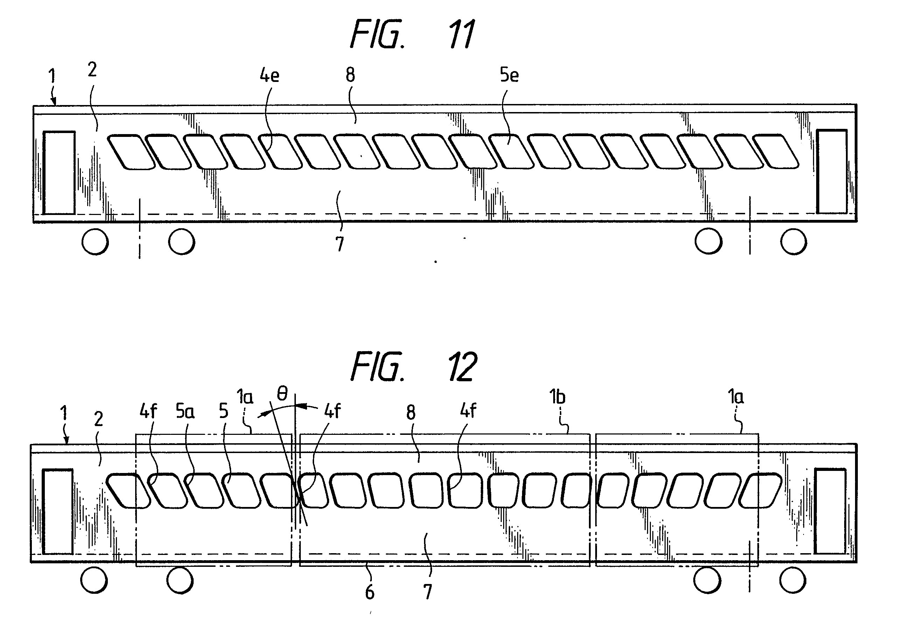

Referring next to Fig. 11, a sixth preferred embodiment of the present invention will be described. A feature of the structure of the preferred embodiment of the present invention consists in the fact that an intermediate post frame is formed to be inclined. In this figure, the same reference numerals as that of each of the preferred embodiments denote the same members. Reference numeral 4e denotes an intermediate post frame for forming a window 5e. The intermediate post frames 4e are formed to be inclined by a certain degree in respect to a vertical axis. In this case, in the structure of the preferred embodiment of the present invention, the side posts mounted in a vertical direction through the window head portion 8 and the wainscot portion 7 at their inside part are vertically arranged in an extended direction of the intermediate post frames 4e or from either an upper end or lower end of each of the intermediate post frames 4e.

According to the construction of the preferred embodiment of the present invention, the intermediate post frames 4e are mounted to be inclined, so that the longitudinal direction of the intermediate post frames 4e in respect to the directions of the shearing deformation of the side construction 2 are crossed to each other or made in parallel to each other, or the longitudinal directions of the intermediate post frames 4e in respect to the direction of the shearing deformation of the side construction 2 are crossed to each other and are made similar to a parallel condition. Accordingly, they support a shearing force acting against the side construction 2 as an axial force of the intermediate post frames 4c. Due to this fact, the deformation in respect to the shearing load of the intermediate post frames 4e is reduced. In this way, the installation to be inclined of the intermediate post frames 4e enables a rigidity of the side construction 2 or the entire car body 1 to be improved.

Referring next to Fig. 12, a seventh preferred embodiment of the present invention will be described. A feature of the structure of the present preferred embodiment consists in the fact that the intermediate post frames are mounted to be inclined and at the same time an inclining direction of each of the intermediate post frames are made opposite to each other in one car body. In this figure, the same reference numerals as that of each of the preferred embodiments denote the same members. Reference numeral 4f denotes intermediate post frames each of which is inclined at its upper end toward the end of the car. An inclination angle $\theta$ of the intermediate post frames 4f shows a higher value at the portion 1a of near the body bolster than that of the central portion 1b of the car body 1. An inclination angle $\theta$ of the intermediate post frames 4f is gradually increased from the longitudinal central part of the car body 1 to the end of the car body.

According to the construction of the preferred embodiment of the present invention, the inclination angle of the intermediate post frames 4f approaches mostly toward a direction of the shearing deformation at the portion 1a near the body bolster.

Thus, since the shearing load becomes a tensile axial force in the intermediate post frames 4f, the buckling strength can be improved. Further, since the central portion 1b of the car body 1 shows a low inclination angle of the intermediate post frames 4f, the vertical load acting against the underframe 6 can be transmitted as an axial force in a tension direction from the wainscot portion 7 toward the window head portion 8. In this way, since the load acting against the intermediate post frames 4f can be transmitted as an axial force in a tension direction, this is quite effective in view of its structure.

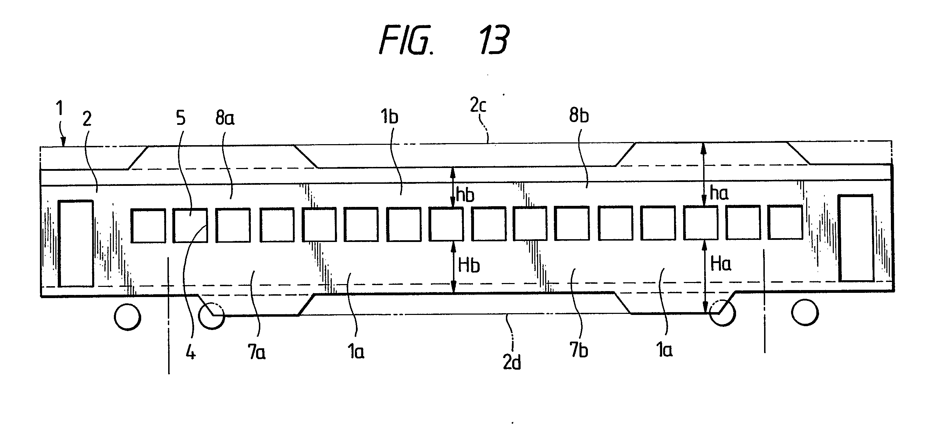

Referring next to Fig. 13, an eighth preferred embodiment of the present invention will be described. A feature of the structure of the preferred embodiment of the present invention consists in the fact that an area of the outside plate portion is increased without changing an apparent shape of the side construction. In this figure, the same reference numerals as that of each of the preferred embodiments denote the same component elements. Reference numeral 7a denotes a at the portion 1a near the body bolster. The wainscot portion 7a is constructed such that the outside plate and the upper or lower frame are projected more downwardly than the wainscot portion 7b of the central part 1b of the car body 1. The wainscot portion 7a has an enlarged area of the outside plate. Accordingly, a height size Ha of the wainscot portion 7a is longer than the height size Hb of the wainscot portion 7b. With this arrangement, the lower side of the side construction 2 is partially projected and so a mounting of the cover 2d enables a straight apparent shape of it to be attained. Reference numeral 8a denotes a window head portion at the portion 1a near the body bolster. The window head portion 8a is constructed such that the outside plate and the frames are projected more upwardly than the window head portion 8b of the central part 1b of the car body 1. The window head portion 8a is made such that its outside plate portion has an enlarged area. Accordingly, a height size ha of the window head portion 8a is longer than the height size hb of the window head portion 8b. With this arrangement, an upper side of the side construction 2 is partially projected, the cover 2c is arranged at a concave part so as to make a straight apparent shape.

According to the constitution of the preferred embodiment of the present invention, since the area of the outside plate portion of the side construction 2 at the portion 1a near the body bolster can be enlarged, so a rigidity at this portion can be improved and an amount of deformation caused by a shearing load can be reduced.

As regards the above-mentioned covers 2c and 2d, if they are constructed with a complex material of resin system, an increasing of weight of the car body 1 can be reduced to a minimum.

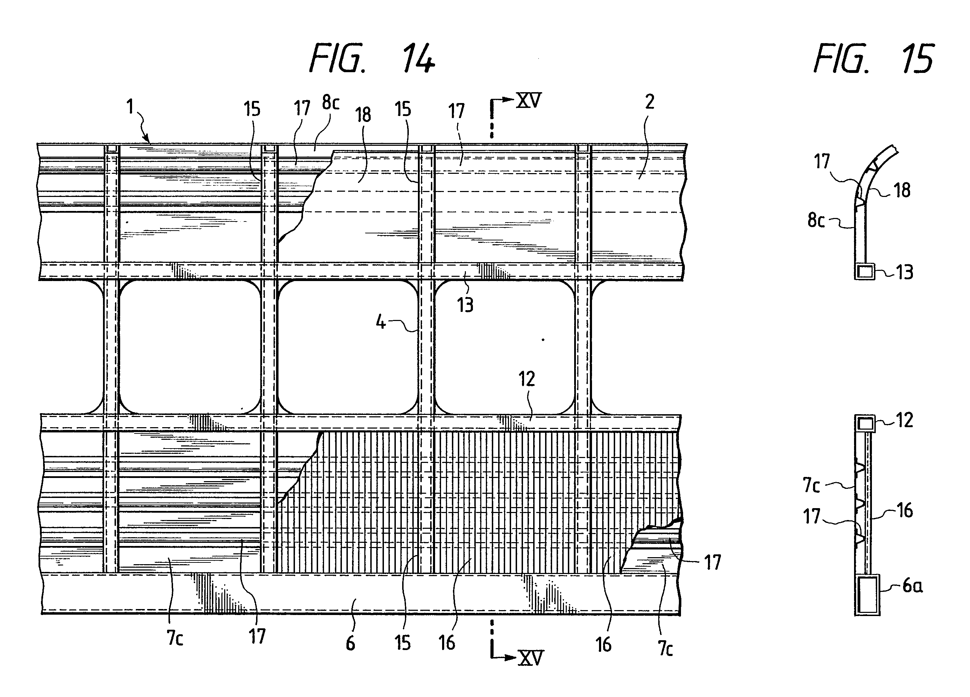

Referring next to Figs. 14 and 15, a ninth preferred embodiment of the present invention will be described. A feature of the structure of the preferred embodiment of the present invention consists in the fact that a reinforcement member is mounted at an inner surface of the outside plate in respect to the portion near the body bolster of the side construction. In this figure, reference numeral 7c denotes a wainscot portion of a portion 1a near the body bolster. To an inner surface of the outside plate constituting the wainscot portion 7c is connected a vertical rib 17. To the inner side of the vertical rib 17 is connected a corrugated plate 16 formed with vertical grooves therein with an arc spot welding. Reference numeral 15 denotes a side post which is integral with the intermediate post frame 4. Reference numeral 8c denotes a window head portion of the portion 1a near the body bolster. To the inner surface of the outside plate constituting the window head portion 8c is connected the vertical rib 17. To the inner side of vertical rib 17 is connected a flat plate 18 with an arc spot welding process.

According to the constitution of the preferred embodiment of the present invention, rigidity of the wainscot portion 7c and window head portion 8c is enforced by the vertical rib 17, corrugated plate 16 and flat plate 18. With this arrangement, it is possible to improve a rigidity of the side construction 2. That is, a rigidity of the portion 1a near the body bolster of the side construction 2 can be improved and a deformation of it in case of acting of the shearing load can be restricted as less as possible. In addition, according to the constitution of the preferred embodiment of the present invention, the reinforcement member of the above-mentioned corrugated plate 16 and the flat plate 18 is arranged only at the portion 1a near the body bolster, thereby a light weight of the car body 1 can be attained. In addition, an effective improvement of the strength of the car body 1 can be attained.

The above-mentioned corrugated plate 16 may be of a flat plate and even a rod-like reinforcing member can accomplish the improvement of the strength of the unit. In addition, as its connecting method, a rivet bonding having a blind rivets and bonding material may be utilized.

In the preferred embodiments described above, each of them has been described as one in which the outside plate is of a uniform plate thickness. But this may be used as an outside plate having a thick plate at a portion near the body bolster and further the plate may be uniformly formed one or a combined one of different plate thicknesses. With these, a rigidity of the side construction can be improved.

According to the present invention, it is possible to provide such a structure in which a shearing load acting against the car body may effectively supported under an improved strength of the portion near the body bolster and further a rigidity of the car body can be improved. According to the present invention, it is possible to make a light weight car body.

## Claims

1. A car body of railway rolling stock comprising a roof construction, a side construction, an end construction and an underframe in which a portion near a body bolster of said underframe is supported by truck characterized in that the portion near the body bolster of said car body is constructed such that a shearing rigidity in respect to a vertical load is larger than that of a portion other than the portion near said body bolster.

2. A car body of railway rolling stock according to Claim 1 wherein the portion near the body bolster which is a part of said car body and has a vertical plane is constructed such that a shearing rigidity in respect to a vertical load is larger than that of the portion other than the portion near said body bolster.

3. A car body of railway rolling stock according to Claim 1 wherein a portion near the body bolster of a side construction forming a car body is constructed such that a shearing rigidity in respect to a vertical load is larger than that of a portion other than the portion near said body bolster.

4. A car body of railway rolling stock according to Claim 1 wherein a window opening at a portion near the body bolster of a side construction forming a car body is made smaller than a window opening other than the portion near said body bolster.

5. A car body of railway rolling stock according to Claim 1 wherein a width of the intermediate post frames at the portion near the body bolster forming the car body is made larger than a width of an intermediate post frame other than the portion near said body bolster.

6. A car body of railway rolling stock according to Claim 1 wherein the intermediate post frames forming the car body are inclined in respect to a vertical axis.

7. A car body of railway rolling stock according to Claim 6 wherein an inclination angle of the intermediate post frames is made so as to have a larger value as it approaches from the central part of the car body toward the portion near the body bolster.

8 A car body of railway rolling stock according to Claim 7 wherein a direction of the inclination angle of said intermediate post frames is different in a longitudinal direction of the car body.

9. A car body of railway rolling stock according to Claim 8 wherein an inclination angle of said intermediate post frames shows a maximum value at a portion near the body bolster and as it approaches the central part of the car body, it is reduced to a lower value.

10. A car body of railway rolling stock comprising a roof construction, a side construction, an end construction and an underframe in which a portion near a body bolster of said underframe is supported by the truck frames characterized in that at least the intermediate post frames near a supporting point of the side construction forming the car body are made of material having a higher rigidity than that of material forming a portion other than said intermediate post frame.

11. A car body of railway rolling stock according to claim 10 wherein the intermediate post frames of a portion near a body bolster of said side construction are made such that different material having a higher rigidity than that of the material forming a portion other than said intermediate post frame is combined with it.

12. A car body of railway rolling stock comprising a roof construction, a side construction, an end construction and an underframe in which a portion near the body bolster of said underframe is supported by the truck characterized in that a plate thickness of an outside plate of a portion near the body bolster of the side construction forming the car body is made thicker than that of an outside plate other than the portion near the body bolster.

13. A car body of railway rolling stock according to Claim 12 wherein a plate thickness of said outside plate is continuously varied.

14. A car body comprising a roof construction, a side construction, an end construction and an underframe in which a portion near the body bolster of said underframe is supported by the truck characterized in that an outside plate of a portion near the body bolster of the side construction has a larger vertical size than that of the outside plate other than a portion near the body bolster.

# FIG. 1

# FIG. 2

# FIG. 3

EP 0 347 132 A2

FIG. 4

FIG. 5

EP 0 347 132 A2

FIG. 6

## FIG. 7

## FIG. 8

EP 0 347 132 A2

FIG. 9

FIG. 10

EP 0 347 132 A2

FIG. 11

FIG. 12

EP 0 347 132 A2

FIG. 13

FIG. 15

FIG. 14